# EUROPÄISCHE PATENTSCHRIFT

(11) **EP 0 791 516 B1**
(45) Veröffentlichungstag und Bekanntmachung des Hinweises auf die Patenterteilung: **16.08.2000**
(21) Anmeldenummer: 97102080.5
(22) Anmeldetag: 10.02.1997
(51) Int. Cl.: B61D 1/06, B62D 31/04

(54) **Aufzug in einem mehrstöckigen Schienenfahrzeug**
Elevator in a multiple deck railway vehicle
Ascenseur dans un véhicule ferroviaire à plusieurs niveaux

(30) Priorität: 26.02.1996 CH 49096
(43) Veröffentlichungstag der Anmeldung: 27.08.1997
(73) Patentinhaber: DaimlerChrysler AG, 70567 Stuttgart (DE)
(72) Erfinder: Daniel, Peter, Dipl.-Ing., 4133 Pratteln (CH); Ackermann, Marcel, 9533 Kirchberg (CH)

(56) Entgegenhaltungen:
- EP-A- 0 616 934

## Beschreibung

Die Erfindung betrifft einen Aufzug für Personen, insbesondere in Rollstühlen sitzende Personen und Güter in einem mehrstöckigen Schienenfahrzeug, bei dem der Antrieb seitlich ausserhalb des Schachtes angeordnet ist.

Aus der AT 221 573 ist ein Eisenbahnspeisewagen bekanntgeworden, bei dem die Küche und der für die Bedienung der Gäste vorgesehene Wirtschaftsraum mittels Treppen und Speiseaufzügen miteinander verbunden sind. Der Aufzug hat die Aufgabe, Speisen und Geschirr von der Küche in den Wirtschaftsraum zu transportieren.

Der vorstehend beschriebene Aufzug ist lediglich als Kleinlasten- beziehungsweise als Speiseaufzug ausgeführt. Mit dieser Art der Ausführung des Aufzugs besteht keine Möglichkeit zum Transport von schwereren Lasten oder Personen. Zudem ist über die Art und die Disposition der Antriebsmittel, die aufgrund der eingeschränkten Platzverhältnisse einer speziellen Anordnung bedürfen, keine Lösung beschrieben worden.

Mit der DE 43 09 583 (& EP-A-0 616 934) ist ein Aufzugseinbau in einem mehrstöckigen Schienenfahrzeug bekanntgeworden, der zum Transport beispielsweise eines Minibarwagens dienen soll. Dabei wird der vertikale Aufzugsschacht zwischen zwei Treppen angeordnet, die von einem endseitigen Einstiegsraum jeweils in das Unterdeck und das Oberdeck führen. In der Einstiegsraumebene ist zudem eine Einstiegsöffnung vorgesehen, die sich auf der den Zugangsöffnungen der beiden Decks gegenüberliegenden Stirnseite des Schachts befindet. Der Antrieb des Aufzugs ist im oberen Teil des Aufzugsschachts unterhalb des Fahrzeugdachs angeordnet.

Der oben beschriebene Aufzugseinbau beschränkt sich nur auf die Lösung der Anordnung und Ausführung der Aufzugsschachtstrukturen und der Führungselemente. Der nicht näher beschriebene Antrieb soll an einem nicht genau definierten Ort im oberen Teil des Schachtes angebracht werden. Bei einem Einbau eines Aufzugs in einen Eisenbahnwagen müssen jedoch gerade aufgrund der eingeschränkten Platzverhältnisse Art und Anordnung des Antriebs optimal ausgewählt werden um einen effizienten Betrieb zu ermöglichen. Zudem gestattet es die oben beschriebene Aufzugsanlage aufgrund ihrer Abmessungen nicht, Personen, beispielsweise in einem Rollstuhl, zu transportieren.

Der Erfindung liegt die Aufgabe zugrunde, einen Aufzug für Personen, insbesondere Behinderte und Güter in einem mehrstöckigen Schienenfahrzeug der eingangs genannten Art vorzuschlagen, wobei unter Berücksichtigung der eingeschränkten Platzverhältnisse durch eine gezielte Anordnung und eine kompakte Bauweise des Antriebs für den Aufzug eine optimale Platzausnutzung ermöglicht wird und durch die unkomplizierte Art des Antriebs ein zuverlässiger und sicherer Betrieb gewährleistet wird.

Diese Aufgabe wird durch die im Patentanspruch 1 gekennzeichnete Erfindung gelöst.

Die durch die Erfindung erreichten Vorteile sind im wesentlichen darin zu sehen, dass durch einen seitlich ausserhalb des Schachtes angeordneten Antrieb der Kabine praktisch die gesamte Schachthöhe zur Verfügung steht, so dass die Kabinenhöhe genügend gross gewählt werden kann um auch eine in einem Rollstuhl sitzende Person mühelos aufzunehmen.

Durch die in den Unteransprüchen aufgeführten Massnahmen sind vorteilhafte Weiterbildungen und Verbesserungen des im Anspruch 1 angegebenen Aufzugs in einem mehrstöckigen Schienenfahrzeug möglich. Die Anordnung des Antriebs seitlich ausserhalb des selbsttragenden Schachtes ergibt eine einfache Zugänglichkeit für die Wartung des Antriebs und vereinfacht dessen Montage und Demontage. Zudem ergibt sich durch die Verwendung eines Stützkettenantriebs eine äusserst kompakte und platzsparende Antriebseinheit.

In der Zeichnung ist ein Ausführungsbeispiel der Erfindung dargestellt und im folgenden näher erläutert.
Es zeigen:
- Fig.1: eine Ansicht eines mehrstöckigen Schienenfahrzeuges mit einem Aufzug,
- Fig.2: einen Längsschnitt durch ein mehrstöckiges Schienenfahrzeug gemäss Fig.1,
- Fig.3: einen Querschnitt durch ein mehrstöckiges Schienenfahrzeug gemäss Fig.1,
- Fig.4: einen teilweise geschnittenen Aufriss des Aufzugs mit seitlichem Antrieb,
- Fig.5: einen teilweise geschnittenen Seitenriss des Aufzugs mit seitlichem Antrieb, und
- Fig.6: einen teilweise geschnittenen Grundriss des Aufzugs mit seitlichem Antrieb.

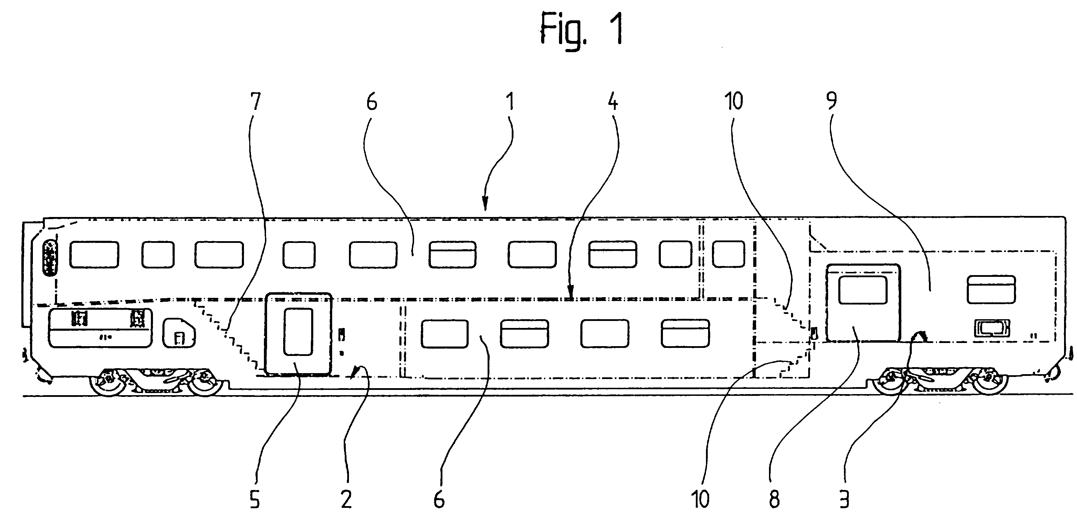

Fig.1 zeigt eine Ansicht eines Doppelstock-Reisezugwagens 1. Der Doppelstock-Reisezugwagen 1 beinhaltet ein Unterdeck 2, ein Mitteldeck 3 und ein Oberdeck 4. Auf beiden Seiten des einen Wagenendes des Doppelstock-Reisezugwagens 1 sind auf der Höhe des Unterdecks 2 für die Passagiere Ein-/Ausstiegstüren 5 angeordnet, die zu Fahrgasträumen 6 führen. Im Bereich der Ein- /Ausstiegstüren 5 ist das Unterdeck 2 über eine Treppe 7 mit dem Oberdeck 4 verbunden. Beim anderen Wagenende sind auf beiden Wagenseiten auf Höhe des Mitteldecks 3 Türen 8 angeordnet. Diese Türen 8 führen zu einem Gepäck- oder Materialabteil 9 und erlauben einen direkten Warenumschlag auf Rampenhöhe eines Bahnhofs. An diesem Wagenende führen zwei kurze Treppen 10 vom Unterdeck 2 zum Mitteldeck 3 bzw. vom Mitteldeck 3 zum Oberdeck 4.

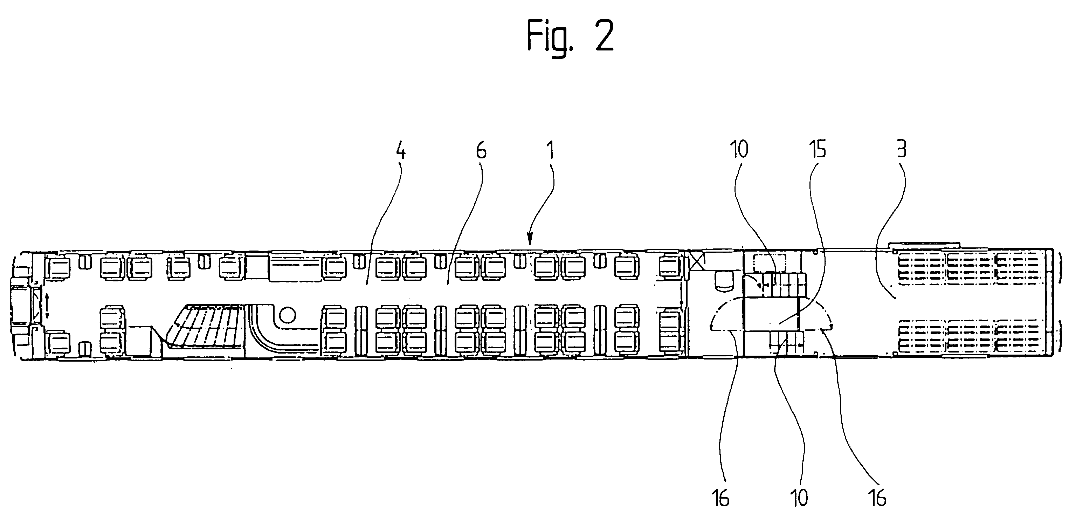

Fig.2 zeigt einen Längsschnitt durch den Doppelstock-Reisezugwagen 1 im Bereich des Mitteldecks 3 und des Oberdecks 4 mit dem Fahrgastraum 6. Zwischen den beiden kurzen Treppen 10 ist ein Aufzug 15 angeordnet. Dieser Aufzug 15 verfügt über Haltestellen auf dem Unterdeck 2, Mitteldeck 3 und Oberdeck 4, wobei auf jedem Deck 2, 3, 4 der Zugang zum Aufzug 15 jeweils über beispielsweise eine Flügeltüre 16 ermöglicht wird. Der Zugang zum Aufzug 15 kann auch über mehrflüglige Türen oder Falttüren erfolgen, die zudem noch mit Glaseinsätzen versehen sein können um Einsicht in den Aufzug 15 zu gewährleisten. Der Aufzug 15 ist so dimensioniert, dass eine in einem Rollstuhl sitzende Person oder auch ein Minibarwagen befördert werden kann.

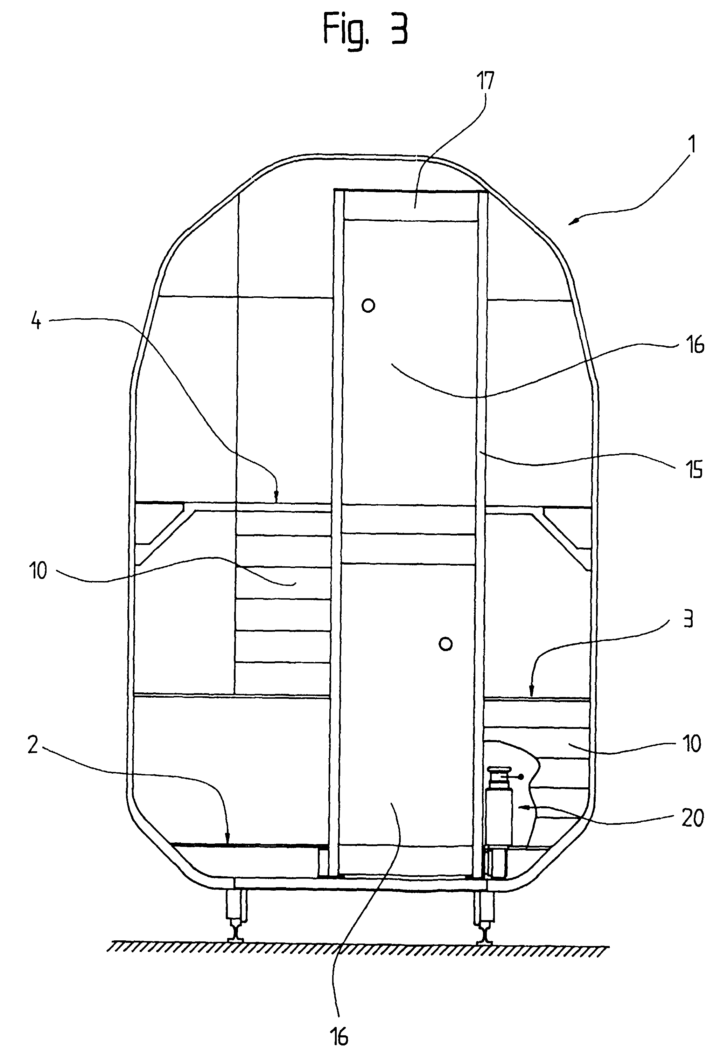

Fig.3 zeigt einen Querschnitt durch den Doppelstock-Reisezugwagen 1 im Bereich des Aufzugs 15. Zwischen den beiden Treppen 10 ist ein Schacht 17 angeordnet. Alle Zugangsöffnungen, auch die in Fig.3 nicht sichtbare Öffnung zum Mitteldeck 3, zum Aufzug 15 sind jeweils mit den Flügeltüren 16 versehen. Eine Antriebseinheit 20 ist seitlich ausserhalb des Schachtes 17 angeordnet. Aufgrund der gegebenen engen Platzverhältnisse befindet sich die Antriebseinheit 20 unter der kurzen Treppe 10, die vom Unterdeck 2 zum Mitteldeck 3 führt. Die Antriebseinheit 20 ist somit für die Fahrgäste nicht zugänglich und durch die versteckte Anordnung werden weder das Erscheinungsbild beeinträchtigt noch das Platzangebot im Bereich der Treppe 10 verkleinert. Der Zugang zur Antriebseinheit 20 erfolgt durch eine Klappe, die beispielsweise mittels einem Vierkanthohlschlüssel geöffnet werden kann, in der Treppe 10 zwischen Unterdeck 2 und Mitteldeck 3. Durch diese Anordnung wird eine einfache Zugänglichkeit bei der Wartung sowie bei der Montage und Demontage gewährleistet.

Um den Sicherheitsanforderungen gerecht zu werden, bewirkt das Öffnen der Klappe ein unmittelbares Stillsetzen der Antriebseinheit 20.

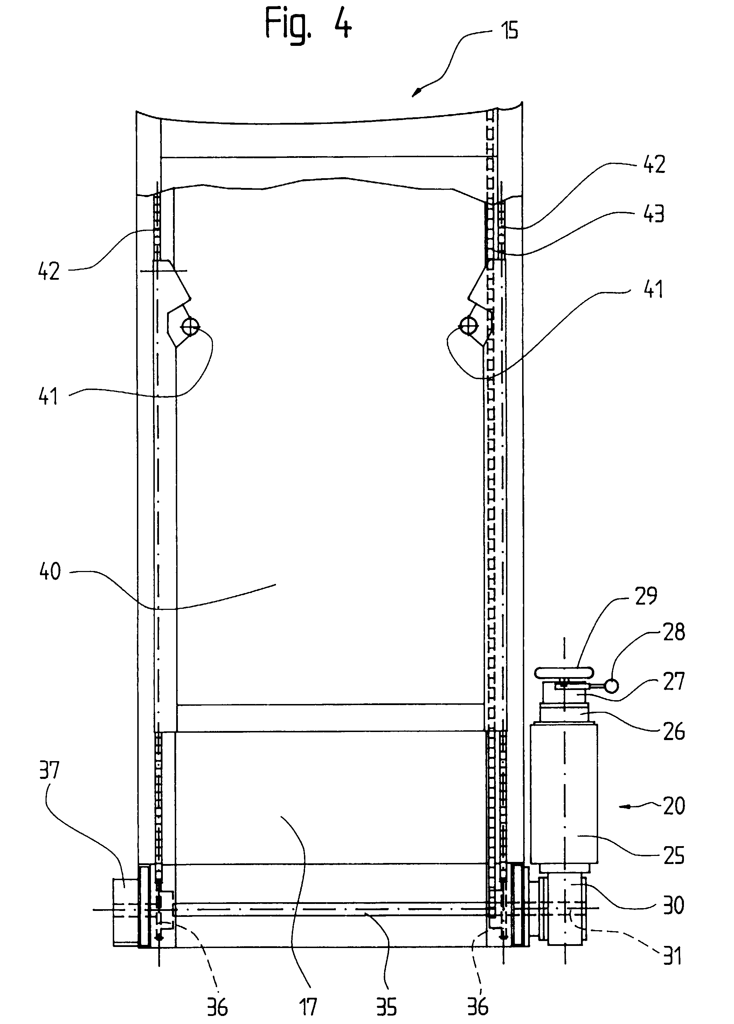

Fig.4 zeigt einen teilweise geschnittenen Aufriss des Aufzugs 15 mit der seitlich angeordneten Antriebseinheit 20. Die seitlich angeordnete Antriebseinheit 20 besteht aus einem Getriebemotor 25, einer Bremse (beispielsweise eine Fliehkraftbremse) 26 die bei einem automatischen Notablass zum Einsatz kommt, einer Sicherheitsbremse 27, einer Handlüftung 28 und einem Handrad 29. Der Getriebemotor 25 ist mit einem Übersetzungs- und je nach Getriebetyp einem Umlenkungsgetriebe ausgerüstet und kann selbsthemmend sein. Der Antrieb selbst kann beispielsweise als Dreiphasenwechselstrom-Asynchronmotor ausgeführt sein. Auf einer Motorwelle 30 sind Umlenkritzel 31 angeordnet. Auf einer Abtriebswelle 35 sind Antriebs- und Umlenkritzel 36 befestigt. Desweitern wird beispielsweise eine Schwungmasse benötigt, die zum Sanftanlauf und Sanftabbremsen dient. Als Schwungmasse kann beispielsweise auch das Handrad 29 auf der Motorwelle 30 verwendet werden. Auf der der Antriebseinheit 20 gegenüberliegenden Seite des Schachtes 17 wird eine Fangbremse 37 angebracht.

Eine Kabine 40 wird im Schacht 17 beidseitig geführt. Die Kabine 40 kann beispielsweise als deckenlose Plattform ausgeführt werden. Als Haltemöglichkeit können in der Kabine 40 beidseitig waagrechte Haltestangen 41 befestigt werden. Der Antrieb der Kabine 40 wird als geführter Stützkettenantrieb ausgeführt. An beiden Seiten des Schachtes 17 wird eine Stützkette 42 angeordnet und über die an der Abtriebswelle 35 angeordneten Antriebsritzel 36 angetrieben. Die Stützketten 42 werden im oberen Schachtende an einer hier nicht sichtbaren Welle mit Ritzeln getragen und umgelenkt. Zusätzlich zur doppelt geführten Stützkette 42 kann beispielsweise auch eine Fangvorrichtung in Form einer Fangschiene 43 vorgesehen werden, die im Falle eines Bruches der Abtriebswelle 35 oder einer Verbindung den freien Fall der Kabine 40 verhindert. Nach einem allfälligen Ansprechen dieser Fangvorrichtung lässt sich die Kabine 40 mittels dem an der Antriebseinheit 20 angeordneten Handrad 29 nach oben bewegen.

Für eine gefahrlose Wartung im Schacht 17 wird die Kabine 40 in ihrer obersten Position arretiert. Zu diesem Zweck wird eine von Hand zu bedienende Arretierungsvorrichtung angeordnet, die betätigt werden kann, ohne dass der Schacht 17 betreten werden muss. Die eingerückte Wartungsarretierung bewirkt das Ausserbetriebsetzen des Aufzugs 15 und verhindert ein Wiedereinschalten.

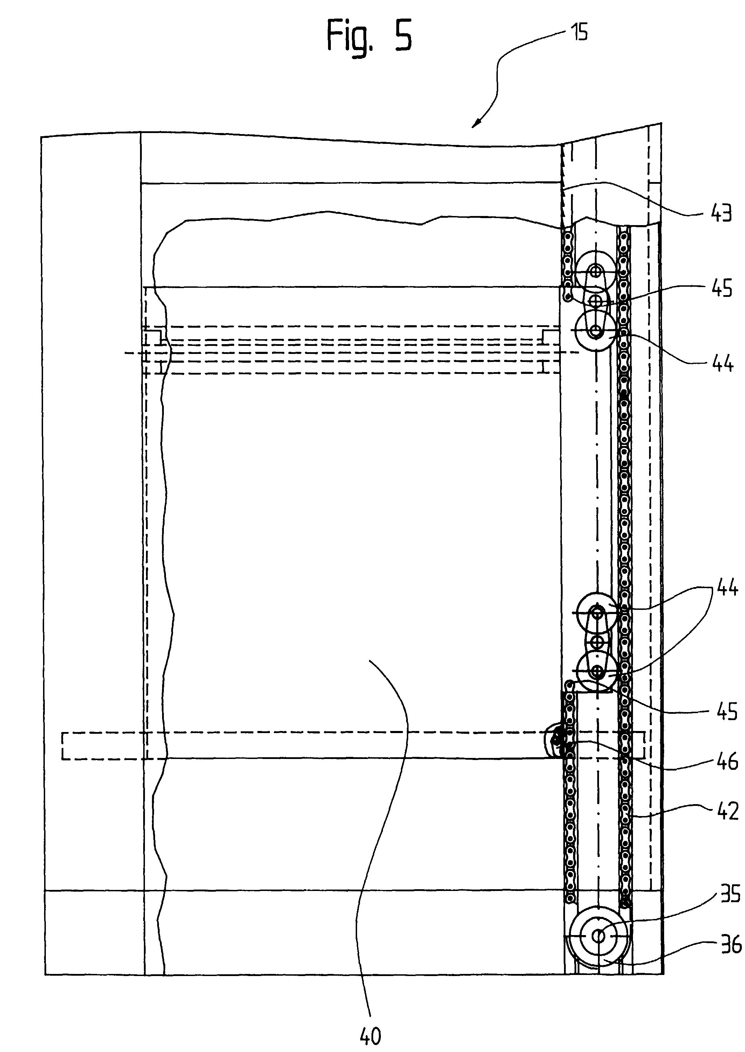

Fig.5 zeigt einen teilweise geschnittenen Seitenriss des Aufzugs 15 mit der seitlich angeordneten Antriebseinheit 20. Die Führung der Kabine 40 im Schacht 17 wird durch Führungsrollen 44 gewährleistet. Die Enden 45 der Stützketten 42 werden jeweils an der Kabine 40 befestigt. Die neben der Stützkette 42 fixierte Fangschiene 43 weist ein gezacktes Profil auf. Die Aktivierung der Fangvorrichtung erfolgt durch das Einfallen einer an der Kabine 40 montierten Fangklinke 46 in die Fangschiene 43.

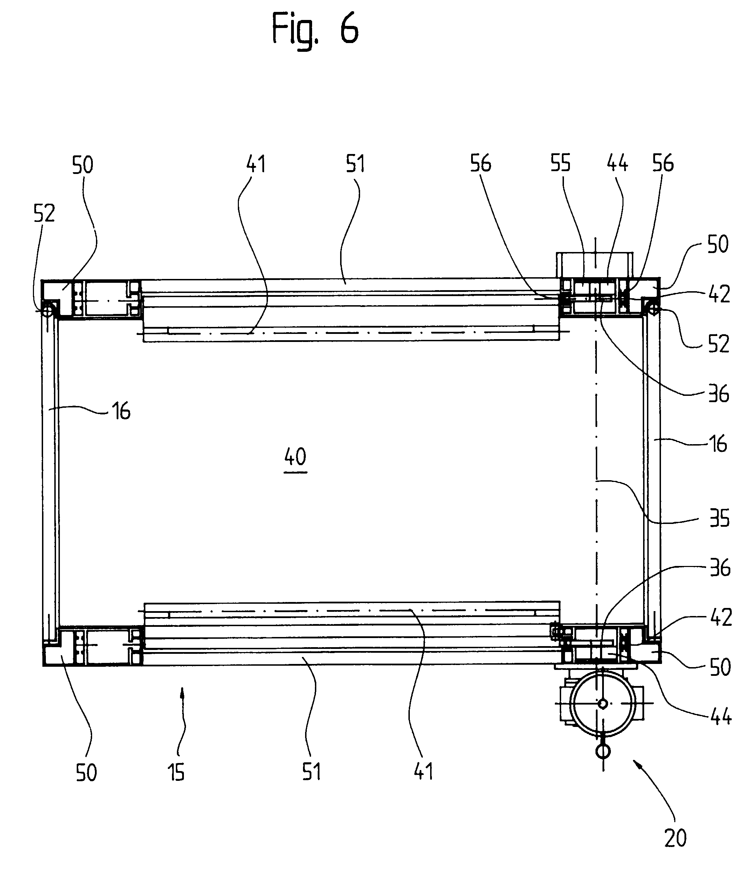

Fig.6 zeigt einen teilweise geschnittenen Grundriss des Aufzugs 15 durch die Kabine 40, mit der seitlich angeordneten Antriebseinheit 20. Die Kabine 40 mit den seitlich angeordneten Haltestangen 41 wird durch den Schacht 17 bildende Querstreben 50, insbesondere aus Leichtmetall, geführt. Die Querstreben 50 bilden die tragenden Elemente des Schachtes 17. Schachtwände 51 werden an den Querstreben 50 befestigt. Die Schachtwände 51, die vom Schachtinnenraum aus montiert werden, gehören nicht zur tragenden Struktur und sind deshalb in Leichtbauweise ausgeführt. Die Querstreben 50 verfügen jeweils über eine Profilstruktur 55 zur Führung der Führungsrollen 44 und über zwei Kettenführungen 56. Beide Stützketten 42 werden über die mit der Antriebseinheit 20 verbundene Abtriebswelle 35 mit den Antriebsritzeln 36 angetrieben. An den Querstreben 50 werden ausserdem die mit Scharnieren 52 versehenen Flügeltüren 16 befestigt.

Als weitere Ausführungsvariante kann die Antriebseinheit 20 auch am oberen Ende des Schachtes 17, beispielsweise in einem geschlossenen Raum im Zugbegleiterabteil, angebracht werden. Der Zugang zur Antriebseinheit 20 erfolgt dann durch eine Klappe im Zugbegleiterabteil und ist ebenfalls für die Fahrgäste nicht zugänglich. In diesem Fall befindet sich die Abtriebswelle 35 mit den Antriebs- und Umlenkritzeln 36 am oberen Schachtende, die Welle mit den Ritzeln zur Umlenkung der Stützketten 42 am unteren Schachtende.

## Patentansprüche

1. Aufzug (15) für Personen, insbesondere in Rollstühlen sitzenden Personen und Güter in einem mehrstöckigen Schienenfahrzeug (1), wobei der Aufzug (15) auf jedem Deck (2, 3, 4) eine Türe (16) zum Betreten einer in einem Schacht (17) geführten Kabine (40) aufweist,
dadurch gekennzeichnet,
dass eine Antriebseinheit (20) zum Antreiben der Kabine (40) seitlich ausserhalb des Schachtes (17) an einer für die Fahrgäste nicht zugänglichen Örtlichkeit angeordnet ist.

2. Aufzug (15) nach Anspruch 1,
dadurch gekennzeichnet,
dass die Antriebseinheit (20) im Unterdeck (2) unter einer Treppe (10) angebracht ist.

3. Aufzug (15) nach Anspruch 1,
dadurch gekennzeichnet,
dass die Antriebseinheit (29) im Oberdeck (4), insbesondere im Zugbegleiterabteil angebracht ist.

4. Aufzug (15) nach einem der Ansprüche 1 bis 3,
dadurch gekennzeichnet,
dass die Antriebseinheit (20) die Kabine (40) mittels geführter Stützketten (42) antreibt.

5. Aufzug (15) nach einem der Ansprüche 1 bis 4,
dadurch gekennzeichnet,
dass an zwei Seiten des Schachtes (17) eine Stützkette (42) angebracht ist, die von einer mit Umlenk- und Antriebsritzeln (36) versehenen und mit der Antriebseinheit (20) verbundenen Abtriebswelle (35) angetrieben werden.

6. Aufzug (15) nach einem der Ansprüche 1 bis 5,
dadurch gekennzeichnet,
dass die Antriebseinheit (20) ausser einem Getriebemotor (25) eine Fliehkraftbremse (26), eine Sicherheitsbremse (27), eine Handlüftung (28) und ein Handrad (29) aufweist.

7. Aufzug (15) nach einem der Ansprüche 1 bis 6,
dadurch gekennzeichnet,
dass der Getriebemotor (25) der Antriebseinheit (20) ein Dreiphasenwechselstrom-Asynchronmotor ist.

8. Aufzug (15) nach einem der Ansprüche 1 bis 7,
dadurch gekennzeichnet,
dass der Getriebemotor (25) mit einem Übersetzungsgetriebe und insbesondere mit einem Umlenkungsgetriebe mit selbsthemmender Wirkung ausgerüstet ist.

9. Aufzug (15) nach einem der Ansprüche 1 bis 8,
dadurch gekennzeichnet,
dass auf der der Antriebseinheit (20) gegenüberliegenden Seite des Schachtes (17) eine Fangbremse (37) angebracht ist.

10. Aufzug (15) nach einem der Ansprüche 1 bis 8,
daurch gekennzeichnet,
dass eine Fangvorrichtung, in Form einer im Schacht (17) angeordneten Fangschiene (43) und einer an der Kabine (40) befestigten Fangklinke (46), angebracht ist.

## Claims

1. Elevator (15) for people, especially people sitting in wheelchairs, and goods in a multiple deck rail vehicle (1), the elevator (15) having on each deck (2, 3, 4) a door (16) for entry to a cabin (40) guided in a shaft (17), characterized in that a drive unit (20) for driving the cabin (40) is arranged laterally outside the shaft (17), in a location not accessible to the passengers.

2. Elevator (15) according to Claim 1, characterized in that the drive unit (20) is mounted on the bottom deck (2), under a stair (10).

3. Elevator (15) according to Claim 1, characterized in that the drive unit (29) is mounted on the top deck (4), in particular in the guard's compartment.

4. Elevator (15) according to one of Claims 1 to 3, characterized in that the drive unit (20) drives the cabin (40) by means of guided supporting chains (42).

5. Elevator (15) according to one of Claims 1 to 4, characterized in that a supporting chain (42), which is driven by an output shaft (35) provided with direction-change and drive pinions (36) and connected to the drive unit (20), is mounted on two sides of the shaft (17).

6. Elevator (15) according to one of Claims 1 to 5, characterized in that, in addition to a geared motor (25), the drive unit (20) has a centrifugal brake (26), a safety brake (27), a manual vent (28) and a hand wheel (29).

7. Elevator (15) according to one of Claims 1 to 6, characterized in that the geared motor (25) of the drive unit (20) is a three-phase asynchronous AC motor.

8. Elevator (15) according to one of Claims 1 to 7, characterized in that the geared motor (25) is equipped with a reduction gear and, in particular, with a direction-change gear with a self-locking action.

9. Elevator (15) according to one of Claims 1 to 8, characterized in that a catch brake (37) is fitted on the opposite side of the shaft (17) from the drive unit (20).

10. Elevator (15) according to one of Claims 1 to 8, characterized in that a catch device in the form of a catch rail (43) arranged in the shaft (17) and of a catch pawl (46) secured on the cabin (40) is mounted.

## Revendications

1. Ascenseur (15) de personnes, en particulier de personnes assises dans des fauteuils roulants et des marchandises dans un véhicule ferroviaire à plusieurs niveaux (1), dans lequel l'ascenseur (15) présente, sur chaque pont (2, 3, 4) une porte (16) permettant d'entrer dans une cabine (40) guidée dans une cage (17), caractérisé en ce qu'une unité d'entraînement (20) pour l'entraînement de la cabine (40) est disposée latéralement à l'extérieur de la cage (17) en une position non accessible aux voyageurs.

2. Ascenseur (15) selon la revendication 1, caractérisé en ce que l'unité d'entraînement (20) est montée dans le pont inférieur (2) sous un escalier (10).

3. Ascenseur (15) selon la revendication 1, caractérisé en ce que l'unité d'entraînement (20) est montée dans le pont supérieur (4), en particulier dans le compartiment du personnel du train.

4. Ascenseur (15) selon l'une quelconque des revendications 1 à 3, caractérisé en ce que l'unité d'entraînement (20) entraîne la cabine (40) au moyen de chaînes de support guidées (42).

5. Ascenseur (15) selon l'une quelconque des revendications 1 à 4, caractérisé en ce qu'une chaîne de support (42) est montée des deux côtés de la cage (17), et est entraînée par un arbre mené (35) pourvu de pignons de déflection et d'entraînement (36) et connecté à l'unité d'entraînement (20).

6. Ascenseur (15) selon l'une quelconque des revendications 1 à 5, caractérisé en ce que l'unité d'entraînement (20) présente, en plus d'un moto-réducteur (25), un frein centrifuge (26), un frein de sécurité (27), une aération manuelle (28) et une roue à main (29).

7. Ascenseur (15) selon l'une quelconque des revendications 1 à 6, caractérisé en ce que le moto-réducteur (25) de l'unité d'entraînement (20) est un moteur asynchrone à courant alternatif triphasé.

8. Ascenseur (15) selon l'une quelconque des revendications 1 à 7, caractérisé en ce que le moto-réducteur (25) est équipé d'un réducteur, et en particulier, d'un engrenage de déflection à effet auto-bloquant.

9. Ascenseur (15) selon l'une quelconque des revendications 1 à 8, caractérisé en ce qu'un frein de sûreté (37) est monté du côté de la cage (17) opposé à l'unité d'entraînement (20).

10. Ascenseur (15) selon l'une quelconque des revendications 1 à 8, caractérisé en ce qu'un dispositif d'accrochage est monté sous la forme d'un rail d'accrochage (43) disposé dans la cage (17) et d'un cliquet d'accrochage (46) fixé à la cabine (40).
